Europäisches Patentamt

European Patent Office

Office européen des brevets

(11) Veröffentlichungsnummer: **0 204 128 B1**

# EUROPÄISCHE PATENTSCHRIFT

(45) Veröffentlichungstag der Patentschrift: 03.04.91

(51) Int. Cl.⁵: **E21B 17/046, F16L 37/14**

(21) Anmeldenummer: 86105704.0

(22) Anmeldetag: 25.04.86

(54) **Steckverbindung für Bohrgestänge von Erdbohrgeräten.**

(30) Priorität: 03.06.85 DE 3519773

(43) Veröffentlichungstag der Anmeldung:
**10.12.86 Patentblatt 86/50**

(45) Bekanntmachung des Hinweises auf die
Patenterteilung:
**03.04.91 Patentblatt 91/14**

(84) Benannte Vertragsstaaten:
**AT BE CH DE FR GB IT LI LU NL SE**

(56) Entgegenhaltungen:
**DE-A- 1 206 378
FR-A- 1 310 712
FR-A- 2 300 247
US-A- 4 293 148**

(73) Patentinhaber: **Bauer Spezialtiefbau GmbH
Postfach 1260 Wittelsbacherstrasse 5
W-8898 Schrobenhausen(DE)**

(72) Erfinder: **Bauer, Karlheinz, Dr. Ing.
Leonhardisteig 12
W-8898 Schrobenhausen(DE)**
Erfinder: **Haberer, Johann, Ing. grad.
Dreilinden 2
W-8898 Schrobenhausen(DE)**
Erfinder: **Arzberger, Maximilian Michael, Ing.
grad.
Augsburger Strasse 16
W-8894 Igenhausen(DE)**

(74) Vertreter: **Weber, Otto Ernst, Dipl.-Phys. et al
Weber & Heim Hofbrunnstrasse 36
W-8000 München 71(DE)**

## Beschreibung

Die Erfindung betrifft eine Steckverbindung für Bohrrohre, -gestänge und -schnecken von Erdbohrgeräten oder dergleichen nach dem Oberbegriff des Patentanspruches 1.

Eine bekannte Steckverbindung für Bohrrohre weist an einem Rohrende ein Vaterteil und am gegenüberliegenden Rohrende ein Mutterteil auf. Am Vater- und Mutterteil ist jeweils die eine Hälfte einer Radial- und einer Axialkupplung ausgebildet. Die Hälfte der Radialkupplung am Vaterteil ist gegenüber dessen vorderen Ende an einer zurückgezogenen Stelle angeordnet und besteht aus gleichmäßig im Abstand über den Außenumfang verteilten Keilen und die Hälfte der Axialkupplung vom Vaterteil besteht aus einer gegenüber der Radialkupplung an einem vorderen Abschnitt angeordneten, im Außenumfang eingebrachten Ringnut mit Gewindebohrungen im Nutengrund. Das Mutterteil weist unmittelbar an seinem vorderen Endabschnitt die gesamte Wandung des Mutterteils durchbrechende Ausnehmungen auf, die komplementär zu den am Vaterteil ausgebildeten Keilen geformt sind. Die Radialkupplung zur Übertragung des Drehmomentes wird damit von einer Keil- oder Klauenkupplung gebildet. Am Mutterteil ist weiterhin an zurückgezogener Stelle am Innenumfang eine Ringnut ausgebildet, welche im gekuppelten Zustand unmittelbar über der im Vaterteil ausgebildeten umlaufenden Nut zu liegen kommt, so daß die beiden Ausnehmungen einen sich in Umfangsrichtung erstreckenden Ringraum bilden. Die Ringnut im Mutterteil ist von außen durch mehrere (beispielsweise 3) Durchbrechungen zugänglich, welche im wesentlichen die gleiche Axialerstreckung wie die Ringnut aufweisen und welche unmittelbar in die Ringnut selbst münden. An den Durchbrechungen ist es möglich, die gesamte Wanddicke des Mutterteiles zu durchgreifen. Zur formschlüssigen Kupplung von Vater- und Mutterteil ist eine Sperreinrichtung erforderlich, welche aus mehreren Einheiten besteht, welche durch die Durchbrechungen jeweils einzeln in einen Ringraumabschnitt einzubringen sind. Eine derartige Sperreinheit besteht aus zwei Keilen, welche entgegengesetzt in Umfangsrichtung durch die Durchbrechung in den Ringraum einzuschieben sind. Die beiden Keile müssen dann durch eine zusätzliche Sicherungseinrichtung,beispielsweise eine Federklammer und eine Schraube,am Herausfallen gehindert werden. Die Schraube muß dabei in eine der in der Ringnut am Vaterteil ausgebildeten Gewindebohrungen eingedreht werden.

An der bekannten Art,zwischen Vater- und Mutterteil eine formschlüssige Axialkupplung herzustellen, ist nachteilig, daß die Sperreinrichtung aus mehreren Sperreinheiten gebildet ist, von denen jede aus mehreren losen Teilen besteht und von denen jede gesondert montiert und demontiert werden muß. Außerdem ist an der bekannten Kupplungseinrichtung nachteilig, daß jede Sperreinheit durch eine gesonderte Durchbrechung in Kupplungseingriff gebracht werden muß. Es sind somit mehrere gleichmäßig über den Umfang des Mutterteiles verteilte Durchbrechungen oder Fenster notwendig, so daß der Querschnitt zur Kraftübertragung des Mutterteiles insgesamt stark geschwächt wird. Schließlich ist auch von Nachteil, daß für die bekannten Sperreinheiten in jedem Fall eine Sicherungseinrichtung notwendig ist, welche die eingebrachten Teile oder Paßstücke an einem Herausfallen hindert.

Aus der DE-B-12 06 378 ist eine gattungsgemäße Steckverbindung für Bohrrohre oder dergleichen bekannt. Hierbei ist vorgesehen, daß mehrere Gliederketten in den Ringraum eingeführt werden, und daß für jede der Gliederketten eine Öffnung im Mutterteil vorhanden ist. Die einzelnen Gliederketten nehmen jeweils den Raum zwischen den Öffnungen ein. Wenn sie vollständig in den Ringraum eingeführt sind, werden sie mit Hilfe von Verschlußstücken arretiert, die in die Öffnungen eingesetzt und mit Hilfe von Sicherungsschrauben mit einem Endverschlußglied eines der Gliederbänder arretiert sind. Da systembedingt mehrere Durchbrüche im Mutterteil vorgesehen sind, wird dieses im Kupplungsbereich geschwächt. Außerdem ist es unbedingt erforderlich, daß jeder der Durchbrüche daraufhin überwacht wird, ob er mit Verschlußstücken und Sicherungsschrauben versehen ist. Es kann dabei leicht das Einführen einer der Gliederketten und/oder deren Sicherung übersehen werden, so daß die Rohrverbindung mangelhaft ist. Eine Drehmomentübertragung erfolgt über eine radiale Verzahnung an den Rohrenden.

Ferner ist in der FR-A-13 10 712 eine Rohrverbindung beschrieben, bei welcher über eine einzige Öffnung im Mutterteil eine einstückige Gliederkette eingeführt wird. Mit diesem Rohr sollen Flüssigkeiten oder Gase übertragen werden und es ist aus diesem Grunde für die Anwendung als Bohrgestänge oder ähnliches weder vorgesehen noch geeignet. Insbesondere können keine Drehmomente übertragen werden. Im montierten Zustand ragt ein freies Ende der Gliederkette aus der Öffnung des Mutterrohres heraus. Würde man daher diese Rohrverbindung für rotierende Rohre vorsehen, so würde dieses freie Ende eine Gefahr für das Bedienpersonal darstellen, da es frei nach außen absteht. Außerdem könnte sich dieses Ende an einem ortsfesten Gestänge oder ähnlichem verhaken und die Gliederkette könnte unbeabsichtigt auf diese Weise aus dem Ringraum herausgezogen werden.

Des weiteren sind aus der FR-A-23 00 247 sowie durch die DE-B-12 06 378 Stahlrollen bekannt, die über Metallseiten miteinander verbunden werden können und die zur Verbindung einer Muffe mit zwei Rohrenden dienen.

Schließlich beschreibt die US-A-4,293,148 Abschrägungen in den Zuführöffnungen für mehrere Gliederketten. Hierbei ist ein Endglied so ausgeformt und mit einer Durchtrittsöffnung für eine Sicherungsschraube versehen, daß es in der Öffnung und an der Abschrägung nach dem Einführen der Gliederkette verschraubt werden kann. Aufgrund der Formgebung ist jedoch nicht ausgeschlossen, daß auch das Endstück in den Ringraum gelangt und es ist dann sehr schwierig, die betreffende Gliederkette wieder zu entfernen.

Der Erfindung liegt die Aufgabe zugrunde, eine Verbindung für Bohrrohre der eingangs genannten Art anzugeben, mit welcher große Kräfte in Achsrichtung und große Drehmomente übertragen werden können, und welche leicht handhabbar bei größtmöglicher Sicherheit für das Bedienungspersonal ist. Diese Aufgabe wird durch die im Kennzeichnungsteil des Patentanspruches 1 angegebenen Merkmale gelöst.

Nach dem Grundgedanken der Erfindung ist vorgesehen, die Sperreinrichtung zur Axialkupplung von Vater- und Mutterteil als mehrgliedrige Kette auszubilden, welche sich um den gesamten Ringraum erstreckt und welche durch das Mutterteil hindurch in den Ringraum durch eine einzige Öffnung einzubringen ist.

Damit wird eine aus formstabilen Elementen bestehende Sperreinrichtung vorgeschlagen, mit der einerseits bekannte Steckverbindungen nachgerüstet werden können und mit der andererseits neue, für höhere Kraftübertragung geeignete Steckverbindungen ausgestattet werden können. Die mehrgliedrige Kette nach der Erfindung ersetzt die bekannten Sperreinheiten. Der Aufbau der Sperreinrichtung wird insgesamt stark vereinfacht und durch ein einfaches Einschieben der mehrgliedrigen Kette durch eine einzige Öffnung in Umfangsrichtung ist eine äußerst schnelle Montagemöglichkeit auch ohne Werkzeug gegeben. Darüber hinaus wird die axiale Pressung auf den gesamten Umfang verteilt, da nahezu der ganze Ringraum von formschlüssigen Elementen erfüllt ist. Die Scherfläche zur Übertragung der Axialkraft wird außerordentlich groß. Mit der Tatsache, daß die erfindungsgemäße Sperreinrichtung nur ein einziges Verbindungsteil darstellt, sind die wesentlichen Vorteile verbunden, daß ein Verlieren von Kleinteilen vermieden wird und daß die mehrgliedrige Kette im montierten Zustand insbesondere dann, wenn die Kettenglieder durch ein Federstahlband miteinander verbunden sind, nicht mehr gegen ein Herausfallen aus dem Ringraum gesichert werden muß.

Infolge der neugestalteten Sperreinrichtung ist es darüber hinaus nicht mehr notwendig, in das Mutterteil mehrere Durchbrechungen einzuarbeiten, sondern es genügt, wenn im Mutterteil eine einzige Öffnung vorgesehen wird, durch welche die erfindungsgemäße Kette in tangentialer Richtung eingeschoben werden kann. Damit wird nicht nur der Herstellungsaufwand für das Mutterteil geringer, sondern es ergibt sich daraus gleichzeitig der Vorteil, daß das Mutterteil infolge seiner geringeren Schwächung bei gleichen Abmessungen wie bisher zur höheren Kraftübertragung geeignet ist.

In einem bevorzugten Ausführungsbeispiel ist vorgesehen, daß die mehrgliedrige Kette durch eine Vielzahl von miteinander verbundenen, im Abstand voneinander angeordneten, quaderförmigen Stahlklötzen gebildet ist. Diese Ausführungsform der Kette eignet sich besonders, um bekannte Steckverbindungen nachzurüsten, da bei diesen meistens ein Ringraum mit rechteckigem Querschnitt vorgesehen ist.

Bei neu zu fertigenden Steckverbindungen kann es auch angezeigt sein, den Ringraum zwischen Vater- und Mutterteil mit einem kreisförmigen Querschnitt auszubilden, wobei in diesem Fall die Glieder der Kette als eine Vielzahl von miteinander verbundenen, im Abstand zueinander angeordneten Stahlrollen gestaltet sind.

Der Einsatz der beschriebenen erfindungsgemäßen Ketten ist insbesondere dann angezeigt, wenn diese miteinander durch ein Federstahlband verbunden sind, wobei zusätzliche Sicherungen gegen ein Herausfallen der Kette aus dem Ringraum entfallen können.

Der Großteil der mit der Erfindung zu erreichenden Vorteile wird auch bereits dann erreicht, wenn die Kettenglieder durch wenigstens ein Stahlseil miteinander verbunden sind, auf welchem sie aufgereiht und insbesondere durch Lötpunkte im Abstand zueinander festgelegt sind. Auch mit dieser Ausführungsform ist bereits der Grundgedanke der Erfindung zu verwirklichen.

Ein weiteres vorteilhaftes Ausführungsbeispiel der Erfindung stellt eine mehrgliedrige Kette dar, welche durch eine Vielzahl von unmittelbar benachbarten, massiven Kettengliedern gebildet ist, wobei je zwei benachbarte Kettenglieder um eine gemeinsame, im montierten Zustand koaxial zur Achse der Steckverbindung ausgerichtete Achse schwenkbar sind. Mit dieser Art der erfindungsgemäßen Sperreinrichtung kann eine äußerst hohe Kraft in axialer Richtung übertragen werden, da die Packung der Kettenglieder sehr dicht ist.

Um die Montage der erfindungsgemäßen Gliederkette soweit wie möglich zu vereinfachen, wird bei einem an die Erfindung angepaßten Mutterteil mit nur einer einzigen Öffnung die Öffnung wenigstens an der einen, die Öffnung in Umfangsrichtung begrenzenden Seite, an welcher die Kette beim Einschieben in den Ringraum vorbeizuführen ist, derart abgeschrägt, daß die mehrgliedrige Kette leichtgängig in das Mutterteil einzuschieben ist. Eine derartige Abschrägung kann beispielsweise durch funkenerosive Bearbeitung hergestellt werden. Mit einem derartigen Verfahren ist es auch möglich, die zweite Öffnungsseite, welche die Öffnung in Umfangsrichtung begrenzt, abzuschrägen.

Zur Übertragung eines höheren Drehmomentes kann die Kupplungshälfte der Radialkupplung des Mutterteiles, welches mit der erfindungsgemäßen Gliederkette neu hergestellt wird, vorgesehen sein, daß am Innenumfang des vorderen Endabschnittes des Mutterteiles, welcher den Vaterteil überlappt, im Abstand zueinander sich in axialer Richtung erstreckende Taschen eingearbeitet sind, welche komplementär zu den am Vaterteil ausgebildeten Keilen gestaltet sind. Bei dieser Ausführungsform wird die Wanddicke des Mutterteiles nicht ganz durchbrochen, so daß der Querschnitt zur Übertragung des Drehmomentes so wenig wie möglich geschwächt wird.

Insbesondere dann, wenn die erfindungsgemäße Vorrichtung für Bohrrohre verwendet werden soll, in deren Innenquerschnitt eine Flüssigkeit strömt, ist es sinnvoll, am Außenumfang des vorderen Endabschnittes des Vaterteiles in axialer Richtung vor der Ausnehmung für den Ringraum eine Ringnut einzuarbeiten, in welcher eine Dichtung anzuordnen ist. Durch eine dort einzubringende Dichtung kann sowohl die Axialkupplung als auch die Radialkupplung vor Beeinträchtigungen durch eindringendes Wasser geschützt werden.

Nachfolgend wird die Erfindung beispielsweise anhand der Zeichnung beschrieben; es zeigen:

Figur 1          eine perspektivische Ansicht
                 des Vaterteiles einer Steckverbindung;

Figur 2          eine perspektivische Ansicht
                 des Mutterteiles einer Steck-
                 verbindung mit einer Glieder-
                 kette;

Figur 3 a)- c)   verschiedene Ausführungsfor-
                 men von Gliederketten in Vor-
                 deransicht und Draufsicht so-
                 wie

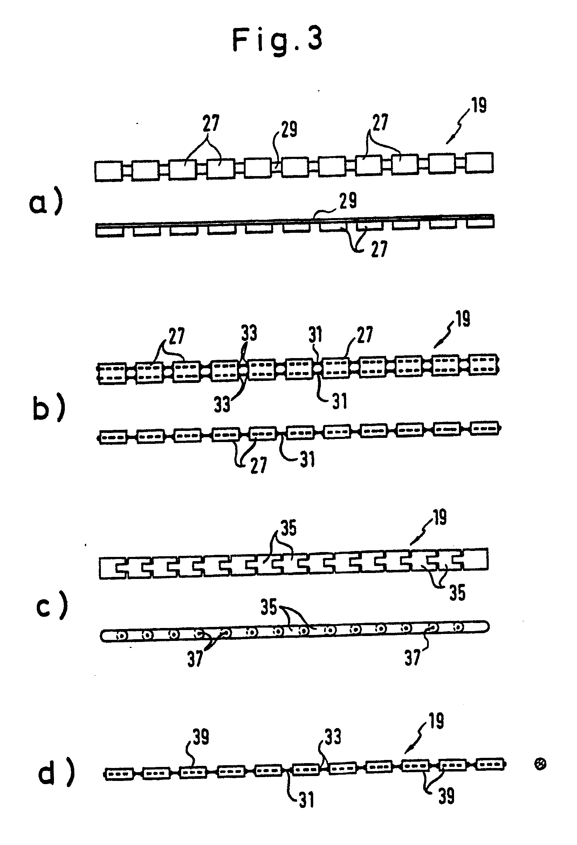

Figur 3 d)       ein weiteres Ausführungsbeispiel einer Gliederkette in
                 Draufsicht.

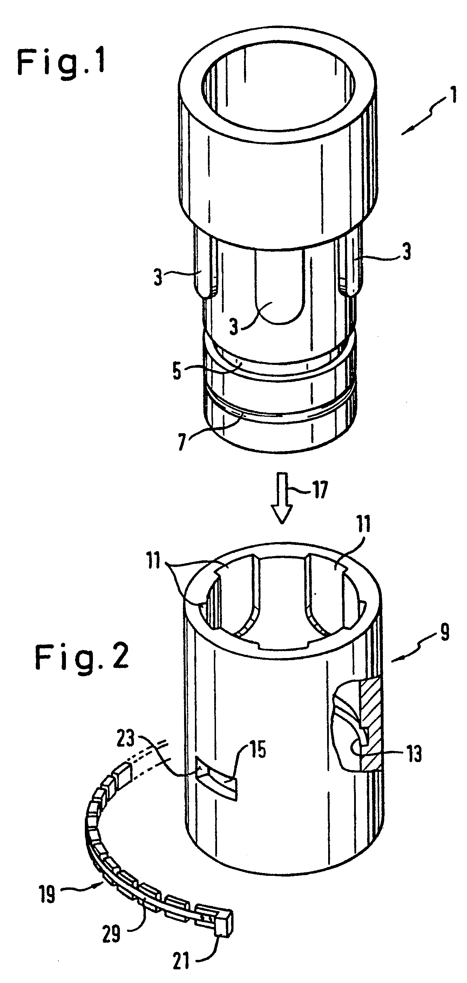

Gemäß Fig. 1 weist das Vaterteil 1 einer Steckverbindung die eine Hälfte einer Radialkupplung, bestehend aus den Keilen 3, eine ringförmige Ausnehmung 5 als innere Hälfte eines zu bildenden Ringraumes und eine Ringnut 7 auf, in welche eine Dichtung einzubringen ist. Die Ringnut 7 ist am vordersten Abschnitt des Vaterteiles 1 angeordnet, gefolgt von der ringförmigen Ausnehmung 5. Die Keile 3 der Radialkupplung sind am weitesten zurückgezogen angeordnet.

In Fig. 2 ist das Mutterteil 9 der Steckverbindung gezeigt. Am vorderen Endabschnitt des Mutterteiles 9 sind am Innenumfang in Umfangsrichtung im Abstand zueinander mehrere Taschen 11 ausgebildet, die eine komplementäre Kontur zu den Keilen 3 des Vaterteiles 1 aufweisen. Die Wanddicke des Mutterteiles 9 wird von den Taschen 11 nicht durchbrochen. Gegenüber den als zweite Hälfte der Radialkupplung ausgebildeten Taschen 11 ist am Innenumfang des Mutterteiles 9 an zurückgezogener Stelle eine ringförmige Ausnehmung 13 ausgebildet. An der gleichen axialen Stelle, an der die ringförmige Ausnehmung 13 in das Mutterteil 9 eingearbeitet ist, befindet sich eine Öffnung 15, welche im wesentlichen die axiale Erstreckung wie die ringförmige Ausnehmung 13 aufweist und welche unmittelbar in die Ausnehmung 13 mündet.

Zur Herstellung der Steckverbindung wird das Vaterteil 1 gemäß dem Pfeil 17 in das Mutterteil 9 bewegt. In montiertem Zustand kommen die ringförmigen Ausnehmungen 5 und 13 unmittelbar übereinander zum Liegen, so daß sie gemeinsam einen Ringraum begrenzen, welcher im dargestellten Fall einen rechteckigen Querschnitt aufweist. Durch die Öffnung 15 kann die Kette 19 in tangentialer Richtung in den Ringraum eingeschoben werden. Das letzte Glied der Kette 19 kann, wie in Fig. 2 gezeigt ist, mit einer Nase 21 ausgebildet sein, um das Einführen der Kette und/oder das Herausnehmen zu erleichtern.

In die Öffnung 15 kann, falls dies im jeweiligen Anwendungsfall und entsprechend der Art der verwendeten Kette sinnvoll erscheint, eine Sicherung gegen ein selbsttätiges Herauswandern der Kette eingebracht werden.

Um das Einführen der Kette 19 in das Mutterteil 9 zu erleichtern, kann beispielsweise die eine Seite 23, welche die Öffnung 15 in Umfangsrichtung begrenzt, derart abgeschrägt sein, daß die Kette 19 in tangentialer Richtung leicht in die Ausnehmungen 5 und 13 einzuführen ist. Es kann auch die der Seite 23 gegenüberliegende Seite 25 auf der Außenseite oder der Innenseite angeschrägt sein.

In den Fig. 3a) bis d) sind mehrere Ausführungsbeispiele für die Gliederkette 19 dargestellt.

Die in Fig. 3a) gezeigte Ausführungsform entspricht im wesentlichen der Kette 19 nach Fig. 2. Die einzelnen Kettenglieder sind durch eine Vielzahl von quaderförmigen Stahlklötzen 27 gebildet, welche im Abstand voneinander angeordnet sind und miteinander durch ein Federstahlband 29 verbunden sind.

Auch bei der Kette 19 nach Fig. 3b) werden als Kettenglieder quaderförmige Stahlklötze 27 vor-

wendet. Die quaderförmigen Stahlklötze 27 sind durch zwei durchlaufende Stahlseile 31 miteinander verbunden, wobei der Abstand der quaderförmigen Stahlklötze 27 zueinander dadurch gehalten wird, daß am Austritt der Stahlseile 31 aus den Klötzen Lötpunkte 33 angebracht sind.

Gemäß Fig.3c) ist die mehrgliedrige Kette 19 durch eine Vielzahl von einander unmittelbar benachbarten massiven Kettengliedern 35 gebildet, wobei je zwei benachbarte Kettenglieder 35 um eine gemeinsame, im montierten Zustand parallel zur Achse der Steckverbindung ausgerichtete Achse 37 schwenkbar sind.

Nach Fig. 3d) besteht die mehrgliedrige Kette 19 aus einer Vielzahl von miteinander verbundenen, im Abstand zueinander angeordneten Stahlrollen 39. Die Stahlrollen 39 sind ebenso wie die quaderförmigen Stahlklötze nach Fig. 3b) durch auf ein Stahlseil 31 aufgebrachte Lötpunkte 33 im Abstand voneinander gehalten. Eine Kette dieser Ausbildung ist in einen zwischen dem Vater- und Mutterteil ausgebildeten Ringraum mit kreisförmigem Querschnitt einzubringen.

## Ansprüche

1. Steckverbindung für Bohrrohre, -gestänge und -schnecken von Erdbohrgeräten oder dergleichen, mit einem Vaterteil (1) und einem Mutterteil (9), mit einer Axialkupplung, welche im Überlappungsbereich von Vater- und Mutterteil (1,9) angeordnet ist und zu deren formschlüssigen Kupplung eine als mehrgliedrige Kette (19) ausgebildete Sperreinrichtung aufweist, die in übereinander angeordnete, jeweils im Vaterteil (1) und Mutterteil (9) ausgebildete, sich in Umfangsrichtung als Ringraum erstreckende Ausnehmungen (5,13) von außen durch das Mutterteil (9) hindurch einbringbar ist, sowie mit einer Radialkupplung, dadurch **gekennzeichnet,** daß am Innenumfang des vorderen Endabschnittes des Mutterteils (9), welcher den Vaterteil (1) überlappt, im radialen Abstand zueinander sich in axialer Richtung erstreckende Taschen (11) eingearbeitet sind, welche auf axialem Abstand von der betreffenden Ausnehmung (5) angeordnet sind, und welche die Wand des Mutterteils (9) nicht durchbrechen, daß die Taschen (11) komplementär zu am Vaterteil (1) ausgebildeten Keilen (3) gestaltet sind, daß sich die Kette (19) im wesentlichen um den gesamten Ringraum (5,13) erstreckt und durch das Mutterteil (9) hindurch in den Ringraum (5,13) durch eine einzige Öffnung (15) einzubringen ist, und daß die Ausnehmung (15) in Umfangsrichtung zwischen zwei Taschen (11) angeordnet ist, und daß das letzte Glied der Kette (19) mit einer Nase (21) versehen ist, die im wesentlichen außenbündig mit dem Mutterteil (9) ist.

2. Vorrichtung nach Anspruch 1, dadurch **gekennzeichnet,** daß die mehrgliedrige Kette (19) durch eine Vielzahl von miteinander verbundenen, im Abstand voneinander angeordneten quaderförmigen Stahlklötzen (27) gebildet ist.

3. Vorrichtung nach Anspruch 1, dadurch **gekennzeichnet,** daß die mehrgliedrige Kette (19) durch eine Vielzahl von miteinander verbundenen, im Abstand zueinander angeordneten Stahlrollen (39) gebildet ist, wobei die mehrgliedrige Kette (19) in einen Ringraum mit kreisförmigem Querschnitt einzubringen ist.

4. Vorrichtung nach Anspruch 2 oder 3, dadurch **gekennzeichnet,** daß die Kettenglieder (Stahlklötze (27) oder Stahlrollen (39)) miteinander durch ein Federstahlband (29) verbunden sind.

5. Vorrichtung nach Anspruch 2 oder 3, dadurch **gekennzeichnet,** daß die Kettenglieder (Stahlklötze (27) oder Stahlrollen (39)) durch wenigstens ein Stahlseil (31) miteinander verbunden sind, auf welchem sie aufgereiht und insbesondere durch Lötpunkte (33) im Abstand zueinander festgelegt sind.

6. Vorrichtung nach Anspruch 1, dadurch **gekennzeichnet,** daß die mehrgliedrige Kette (19) durch eine Vielzahl von unmittelbar benachbarten, massiven Kettengliedern (35) gebildet ist, wobei je zwei benachbarte Kettenglieder (35) um eine gemeinsame Achse (37) schwenkbar sind.

7. Vorrichtung nach einem der Ansprüche 2,3 oder 6, dadurch **gekennzeichnet,** daß die mehrgliedrige Kette (19) mit einer in die Öffnung (15) im Mutterteil (9) einbringbaren Sicherung gegen ein selbstätiges Herauswandern zu sichern ist.

8. Vorrichtung nach Anspruch 1, dadurch **gekennzeichnet,** daß bei der Öffnung (15) wenigstens die eine der die Öffnung (15) in Umfangsrichtung begrenzenden Seiten (23) derart abgeschrägt ist, daß die mehrgliedrige Kette (19) im wesentlichen in tangentialer Richtung in den Ringraum (5,13) einzuführen ist.

9. Vorrichtung nach Anspruch 1,
dadurch **gekennzeichnet,**
daß am Innenumfang des vorderen Endabschnittes des Mutterteiles (9), welcher den Vaterteil (1) überlappt, im Abstand zueinander sich in axialer Richtung erstreckende Taschen (11) eingearbeitet sind, welche komplementär zu am Vaterteil (1) ausgebildeten Keilen (3) gestaltet sind.

10. Vorrichtung nach Anspruch 1,
dadurch **gekennzeichnet,**
daß am Außenumfang des vorderen Endabschnittes des Vaterteiles (1) in axialer Richtung vor der Ausnehmung (5) für den Ringraum (5,13) eine Ringnut (7) eingearbeitet ist, in welcher eine Dichtung anordenbar ist.

## Claims

1. Plug connection for boring rods, tools and worms of earth boring equipment or the like, with a male part (1) and a female part (9), with an axial coupling, which is located in the overlap region of the male and female parts (1, 9) and having for its positive coupling a blocking device constructed as a multilink chain (19), which can be introduced if the outside through the female part (9) into superimposed recesses (5, 13) extending circumferentially as an annulus and formed in the male part (1) and the female part (9), as well as with a radial coupling, characterized in that on the inner circumference of the front end portion of the female part (9), which overlaps the male part (1), are formed in radially spaced manner axially extending pockets (11), which are axially spaced from the particular recess (5) and which do not traverse the wall of the female part (9), that the pockets (11) are complimentary to wedges (3) formed on the male part (1), that the chain (19) extends substantially round the complete annulus (5, 13) and can be introduced through a single opening (15) through the female part (9) into the annulus (5, 13), that the recess (15) is positioned circumferentially between two pockets (11) and that the last link of the chain (19) is prided with a nose (21), which is substantially externally flush with the female part (9).

2. Apparatus according to claim 1, characterized in that the multilink chain is formed by a plurality of interconnected, spaced, parallelepipedic steel blocks (27).

3. Apparatus according to claim 1, characterized in that the multilink chain (19) is formed by a plurality of interconnected, spaced steel rollers (39), the multilink chain (19) being introduced into an annulus with a circular cross-section.

4. Apparatus according to claims 2 or 3, characterized in that the chain links (steel blocks 27 or steel rollers 39) are interconnected by a spring steel strip (29).

5. Apparatus according to claims 2 or 3, characterized in that the chain links (steel blocks 27 or steel rollers 39) are interconnected by at least one steel cable (31), on which they are lined up and fixed in spaced manner with respect to one another, in particular by solder spots (33).

6. Apparatus according to claim 1, characterized in that the multilink chain (19) is formed by a pity of directly adjacent, solid chain links (35), two adjacent chain links (35) being in each case pivotable about a common axis (37).

7. Apparatus according to one of the claims 2, 3 or 6, characterized in that the multilink chain (19) can be secured against automatic migrating out by a securing means introduceable into the opening (15) in the female part (9).

8. Apparatus according to claim 1, characterized in that at least one of the sides (23) circumferentially bounding the opening (15) is bevelled in such a way that the multilink chain (19) can be introduced substantially tangentially into the annulus (5, 13).

9. Apparatus according to claim 1, characterized in that on the inner circumference of the front end portion of the female part (9), which overlaps the male part (1), are formed in spaced manner axially extending pockets (11), which are complimentary to the wedges (3) formed on the male part (1).

10. Apparatus according to claim 1, characterized in that an annular groove (7) is formed on the outer circumference of the front end portion of the male part (1) in the axial direction and upstream of the recess (5) for the annulus (5, 13) and in which can be placed a seal.

## Revendications

1. Fixation par insertion de tubes, tiges ou vis de forage pour appareils de forage ou analogues, avec une pièce mâle et une pièce femelle (9), avec un accouplement axial disposé dans la zone de recouvrement des pièces mâle et femelle (1, 9) et qui présente, pour leur accouplement par interpénétration par la forme, un dispositif de blocage constitué en une chaîne à maillons multiples (19), qu'on peut insérer de l'extérieur par la partie femelle (9) dans les évidements (5, 13) s'étendant en direction périphérique sous forme d'espace annulaire, qui se font face dans la partie mâle (1) et la partie femelle (9), ainsi qu'avec un accouplement radial, caractérisée en ce que, dans la périphérie interne de la partie terminale antérieure de la pièce femelle (9), qui recouvre la pièce mâle (1), on a usiné des rainures (11) s'étendant axialement, disposées radialement l'une par rapport à l'autre, disposées à une distance axiale de l'évidement correspondant (5) et qui ne traversent pas la paroi de la pièce femelle (9), que les rainures (11) sont taillées en forme complémentaire aux clavettes (3) réalisées sur la pièce mâle (1), que la chaîne (19) s'étend en particulier autour de l'espace annulaire global (5, 13) et qu'on peut l'insérer par la pièce femelle (9) dans l'espace annulaire (5, 13) par une ouverture unique (15), et
que l'évidement (15), en direction périphérique est placé entre deux rainures (11), et que le dernier maillon de la chaîne (19) est muni d'un taquet (21) qui vient en particulier affleuré extérieurement la pièce femelle (9).

2. Dispositif selon la revendication 1, caractérisé en ce que la chaîne à maillons multiples (19) est formée de plusieurs maillons d'acier (27) de forme rectangulaire disposés à intervalles l'un de l'autre et reliés entre eux.

3. Dispositif selon la revendication 1, caractérisé en ce que la chaîne à maillons multiples (19) est formée de plusieurs galets d'acier (39) disposés à intervalles l'un de l'autre et reliés entre eux, la chaîne à maillons multiples (19) devant être insérée dans un espace annulaire à section circulaire.

4. Dispositif selon la revendication 2 ou 3, caractérisé en ce que les maillons de chaîne (maillons d'acier (27) ou galets d'acier (29)) sont reliés entre eux par un ruban d'acier à ressort (29).

5. Dispositif selon les revendications 2 ou 3, caractérisé en ce que les maillons de chaîne (maillons d'acier (27) ou galets d'acier (39)) sont reliés entre eux par un câble d'acier (31), sur lequel ils sont placés successivement et notamment sont fixés à intervalles réguliers par des points de soudure.

6. Dispositif selon la revendication 1, caractérisé en ce que la chaîne à maillons multiples (19) est formée de maillons de chaîne (35) massifs immédiatement consécutifs, deux maillons de chaîne consécutifs (35) pouvant pivoter sur un axe commun (37).

7. Dispositif selon l'une des revendications 2, 3 ou 6, caractérisé en ce que la chaîne à maillons multiples (19) est assurée par un frein logeable dans l'ouverture (15) de la pièce femelle (9) pour empêcher une ouverture autonome.

8. Dispositif selon la revendication 1, caractérisé en ce qu'au moins l'une des faces (23) limitant en périphérie l'ouverture (15) est en biseau, de sorte qu'on doit engager la chaîne à maillons multiples (19) dans l'espace annulaire (5, 13) tangentiellement.

9. Dispositif selon la revendication 1, caractérisé en ce que dans la périphérie interne de la partie terminale antérieure de la pièce femelle (9), qui recouvre la pièce mâle (1), on a usiné des rainures (11) s'étendant axialement, disposées à intervalles l'une de l'autre, qui sont taillées en forme complémentaire aux clavettes (3) réalisées sur la pièce mâle (1).

10. Dispositif selon la revendication 1, caractérisé en ce qu'on a usiné à la périphérie externe de la pièce mâle (1) en direction axiale en avant de l'évidement (5) de l'espace annulaire (5, 13) une gorge annulaire (7), dans laquelle on peut placer un joint.

# Fig.1

# Fig.2

# Fig. 3

a)

b)

c)

d)